# DEMANDE DE BREVET EUROPEEN

(11) **EP 4 486 020 A1**
(43) Date de publication de la demande: **01.01.2025**
(21) Numéro de dépôt: 24180990.4
(22) Date de dépôt: 10.06.2024
(51) Int. Cl.: H04W 52/14, H04B 7/06, H04W 52/28, H04W 52/36, H04B 1/3827

(54) **PROCÉDÉ ET DISPOSITIF DE CONTROLE DU FONCTIONNEMENT D'UN DISPOSITIF DE COMMUNICATION DANS FIL**

(30) Priorité: 26.06.2023 FR 2306622
(71) Demandeur: Orange, 92130 Issy-les-Moulineaux (FR)
(72) Inventeur: COIFFARD, Laurent, 92326 CHATILLON CEDEX (FR); GOUMBALLE, Momar, 32326 CHATILLON CEDEX (FR)
(74) Mandataire: Cabinet Beau de Loménie

(57) **Abrégé**

L'invention concerne un procédé de contrôle du fonctionnement d'un dispositif de communication sans fil (100) comportant une pluralité d'antennes (110, 120) configurées pour rayonner spatialement suivant des zones distinctes, ledit procédé comportant une étape de sélection alternative (E40) desdites antennes pour émettre un signal de communication, ladite sélection étant effectuée de sorte que le débit d'absorption spécifique moyen généré par chaque antenne sur une période de temps donnée ainsi qu'en considérant une distance donnée, dite « distance de contrôle », entre le dispositif de communication et le corps humain est inférieur à un seuil déterminé.

## Description

### Technique antérieure

La présente invention appartient au domaine général des télécommunications. Elle concerne plus particulièrement un procédé de contrôle du fonctionnement d'un dispositif de communication sans fil, ainsi qu'un dispositif de contrôle configuré pour mettre en oeuvre ledit procédé de contrôle. Elle concerne également un dispositif de communication sans fil équipé dudit dispositif de contrôle. L'application trouve une application particulièrement avantageuse, bien que nullement limitative, dans le cas où le dispositif de communication sans fil est un téléphone mobile, notamment un téléphone mobile intelligent (« smartphone »).

Dans l'objectif de protéger la santé des personnes vis-à-vis de potentiels effets délétères générés par une exposition à des ondes radioélectriques (i.e. des ondes électromagnétiques se propageant par des moyens non filaires et dont les fréquences sont comprises dans le spectre traditionnel allant de quelques hertz à plusieurs centaines de gigahertz), différentes réglementations ont été mises en place dans certains territoires/pays.

La plupart de ces réglementations, notamment celles en vigueur en Europe et aux Etats-Unis, ont en commun d'imposer des limitations d'exposition aux ondes radioélectriques en utilisant un indice dit « débit d'absorption spécifique », encore plus couramment appelé par son acronyme « DAS » (« SAR » dans la littérature anglosaxonne, en tant qu'acronyme de l'expression « Spécifie Absorption Rate »).

De manière connue, le DAS correspond à une mesure indiquant la puissance d'un flux d'énergie véhiculée par les ondes radioélectriques émises par un dispositif de communication sans fil (téléphone portable, tablettes, montre connectée par exemple) et absorbée par un corps humain, en principe l'usager dudit dispositif, lorsque le dispositif fonctionne à un niveau de puissance d'émission donnée (typiquement à pleine puissance d'émission).

Dans le Système international d'unités, l'unité de mesure du DAS est le watt par kilogramme (W/kg). La mesure du DAS s'effectue de manière connue en soi, à savoir en utilisant par exemple un banc de mesure équipé d'un mannequin humanoïde rempli de liquide ayant les mêmes propriétés diélectriques que celle du corps humain.

En règle générale, les limites d'exposition imposées en termes de DAS se déclinent en fonction des zones du corps concernées. A titre d'exemple, et pour ce qui concerne plus particulièrement la réglementation européenne applicable à tout dispositif de communication apte à émettre suivant une fréquence comprise entre 100 kHz et 10 GHz à une distance inférieure ou égale à 20 cm du corps humain et en utilisant une puissance d'émission supérieure ou égale à 20 mW, les limites d'exposition actuelles sont les suivantes :
- pour la tête ou le tronc, DAS de 2 W/kg sur un échantillon de 10g de matière humaine en mesure instantanée si la puissance d'émission est stable ou bien en mesure moyennée sur une période de temps égale à 6 minutes,
- pour les membres (bras, jambes), DAS de 4 W/kg sur un échantillon de 10g de matière humaine en mesure instantanée si la puissance d'émission est stable ou bien en mesure moyennée sur une période de temps égale à 6 minutes.

Il est à noter que ces limites d'exposition européennes sont définies pour une distance donnée entre le dispositif de communication qui émet et le corps humain. Ainsi, pour ce qui concerne les membres, la distance est de 0 mm. Pour la tête, la distance est également de 0 mm (étant entendu que le dispositif de communication est positionné sur le mannequin de manière très précise avec une cale et un angle qui sont indiqués dans la norme). Enfin, pour ce qui concerne le tronc, la distance considérée jusqu'à récemment était égale à 5 mm. Toutefois, en vue d'imposer une limitation plus grande en termes de niveau d'exposition, il a été décidé que la distance considérée pour la mesure du DAS au niveau du tronc sera bientôt nulle.

D'une manière générale, aussi bien en Europe que dans d'autres territoires, on observe un durcissement des réglementations liées au niveau d'exposition aux champs électromagnétiques, ce qui impose donc des limitations toujours plus fortes pour le niveau de DAS auquel peut être soumis un utilisateur, que ce soit en termes de distances de mesure et/ou de valeurs limites de DAS.

Face à cette situation, une solution envisageable pour respecter des limites d'exposition toujours plus contraignantes pourrait être de diminuer la puissance maximale d'émission d'un dispositif de communication sans fil.

Cette solution n'en reste pas moins problématique dans la mesure où elle engendre une baisse des débits dans le sens montant (« uplink » en anglais), et donc en définitive une qualité de service dégradée.

Un moyen théorique possible de compenser au moins partiellement ces inconvénients pourrait éventuellement consister en des investissements massifs de la part des opérateurs de communication, notamment en augmentant considérablement le nombre de stations de base implantées. Cela étant, là encore, cette solution reste problématique en raison de son coût de mise en oeuvre, aussi bien en termes financiers que matériels et d'espaces au sol préemptés.

### Exposé de l'invention

La présente invention a pour objectif de remédier à tout ou partie des inconvénients de l'art antérieur, notamment ceux exposés ci-avant, en proposant une solution qui permette de respecter des limitations d'exposition exprimées en termes de DAS moyen (i.e. DAS moyenné sur une période de temps donnée) de manière plus efficace que les solutions de l'art antérieur.

Par « plus efficace », on fait référence ici à une solution garantissant un excellent débit de liaison montant, et donc une excellente qualité de service, et dont le coût de mise en oeuvre (financier, matériel, préemption d'espace au sol) est minimal.

A cet effet, et selon un premier aspect, l'invention concerne un procédé de contrôle du fonctionnement d'un dispositif de communication sans fil comportant une pluralité d'antennes configurées pour rayonner spatialement suivant des zones distinctes. Ledit procédé comporte une étape de sélection alternative desdites antennes pour émettre un signal de communication, ladite sélection étant effectuée de sorte que le débit d'absorption spécifique moyen généré par chaque antenne sur une période de temps donnée ainsi qu'en considérant une distance donnée, dite « distance de contrôle », entre le dispositif de communication et le corps humain est inférieur à un seuil déterminé.

Ainsi, le procédé de contrôle selon l'invention permet de répartir de manière alternative et spatiale la puissance d'émission du dispositif de communication sans fil entre les antennes. Autrement dit, le dispositif de communication sans fil émet un signal de communication à une puissance constante, comme par exemple sa puissance maximale d'émission, ce qui permet d'assurer un excellent débit de liaison montant, et donc une excellente qualité de service.

Qui plus est, et c'est le point fondamental de différenciation par rapport à l'état de la technique, ces excellentes performances de communication sont atteintes en respectant un seuil de DAS, qui peut par exemple être dérivé de limites d'exposition imposées dans la cadre d'une contrainte réglementaire.

En d'autres termes, le fait d'utiliser alternativement les antennes (configurées pour rayonner spatialement suivant des zones distinctes) du dispositif de communication sans fil permet avantageusement d'intégrer la contrainte de respect de limites d'exposition tout en garantissant d'excellentes performances de communication. L'atteinte de ce résultat avantageux est en outre peu coûteuse à termes de moyens de réalisation.

Dans des modes particuliers de mise en oeuvre, le procédé de contrôle peut comporter en outre l'une ou plusieurs des caractéristiques suivantes, prises isolément ou selon toutes les combinaisons techniquement possibles.

Dans des modes particuliers de mise en oeuvre, le nombre d'antennes est strictement supérieur à deux.

Dans des modes particuliers de mise en oeuvre, la puissance d'émission utilisée par une antenne sélectionnée est la puissance maximale d'émission du dispositif de communication sans fil.

Dans des modes particuliers de mise en oeuvre, le procédé comporte une étape d'évaluation d'une distance entre le dispositif de communication et le corps humain, l'exécution de l'étape de sélection étant consécutive au fait que ladite distance évaluée est inférieure à un seuil donné.

Dans des modes particuliers de mise en oeuvre, le procédé comporte une étape d'évaluation de la puissance d'émission utilisée par une antenne en cours d'utilisation pour émettre ledit signal de communication, l'exécution de l'étape de sélection étant consécutive au fait que ladite puissance d'émission évaluée est supérieure à un seuil donné.

Dans des modes particuliers de mise en oeuvre, l'étape d'évaluation de la puissance d'émission comporte un ensemble d'évaluations de la puissance d'émission en considérant respectivement un ensemble de valeurs de distance de contrôle, ladite puissance d'émission évaluée correspondant à la puissance d'émission maximale obtenue à partir dudit ensemble d'évaluations de la puissance d'émission.

Par exemple, la puissance d'émission peut être évaluée pour 0mm, 1mm, 2mm, 3mm, 4mm et 5mm du corps humain, la valeur maximale de puissance d'émission étant considérée comme étant la puissance d'émission utilisée pour la comparer à une distance seuil et en fonction de la comparaison mettre en oeuvre ou pas l'étape de sélection.

Dans des modes particuliers de mise en oeuvre, la sélection alternative des antennes est effectuée selon une périodicité fixe ou dynamique.

Dans des modes particuliers de mise en oeuvre, le signal de communication est un signal de téléphonie mobile ou un signal Wi-Fi ou un signal Bluetooth.

Dans des modes particuliers de mise en oeuvre, ladite distance de contrôle est nulle.

Dans des modes particuliers de mise en oeuvre, ladite période de temps est égale à six minutes.

Dans des modes particuliers de mise en oeuvre, le seuil dudit débit d'absorption spécifique moyen est égal à 2 W/kg.

Dans des modes particuliers de mise en oeuvre, la puissance maximale d'émission du dispositif de communication est supérieure ou égale à 20 mW.

Selon un deuxième aspect, l'invention concerne un programme d'ordinateur comportant des instructions pour la mise en oeuvre d'un procédé de contrôle selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un troisième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un quatrième aspect, l'invention concerne un dispositif de contrôle comportant des moyens configurés pour mettre en oeuvre un procédé de contrôle selon l'invention.

Selon un cinquième aspect, l'invention concerne un système de communication sans fil comportant une pluralité d'antennes configurées pour rayonner spatialement suivant des zones distinctes ainsi qu'un dispositif de contrôle selon l'invention.

Selon un sixième aspect, l'invention concerne un procédé de communication mis en oeuvre par un dispositif de communication sans fil selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement un mode particulier de réalisation d'un dispositif de communication sans fil selon l'invention ;
[Fig. 2] la figure 2 représente schématiquement un exemple d'architecture matérielle d'un dispositif de contrôle selon l'invention intégré au dispositif de communication sans fil de la figure 1 ;
[Fig. 3] la figure 3 représente, sous forme d'ordinogramme, un mode particulier de mise en oeuvre d'un procédé de communication, dit « procédé général », mis en oeuvre par le dispositif de communication sans fil de la figure 1, ledit procédé général englobant un procédé de contrôle selon l'invention mis en oeuvre par le dispositif de contrôle de la figure 2 ;
[Fig. 4] la figure 4 illustre un exemple spécifique d'application du procédé de communication de la figure 3.

### Description de modes de réalisation

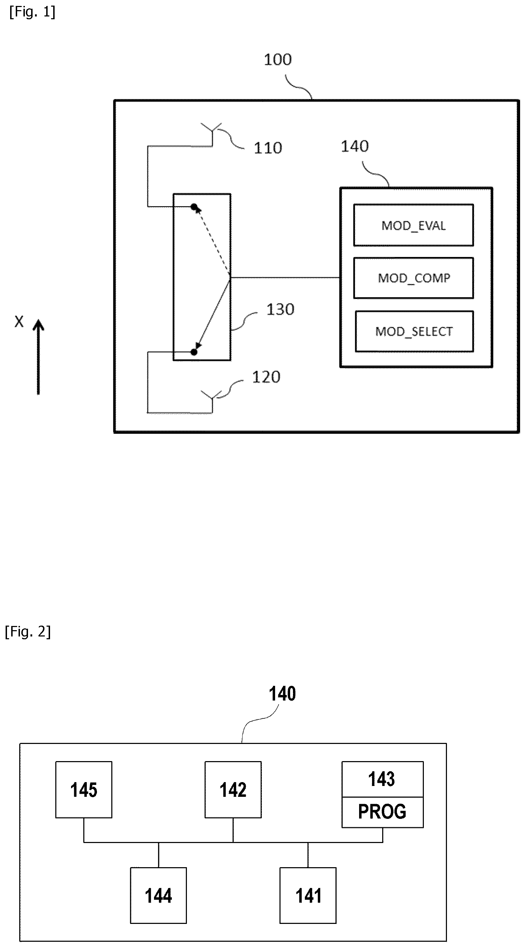

La figure 1 représente schématiquement un mode particulier de réalisation d'un dispositif de communication sans fil 100 selon l'invention.

Pour la suite de la description, les notions de « haut » et « bas » sont définies relativement à l'axe vertical X représenté sur la figure 1, étant entendu que la direction dans laquelle ledit axe X est orienté désigne le « haut ».

On considère également de manière nullement limitative que le dispositif de communication sans fil 100 est un smartphone appartenant à un utilisateur, et que le dispositif de communication 100 est équipé de deux antennes, une première antenne 110 et une deuxième antenne 120. On considère en outre que la puissance maximale d'émission du dispositif de communication sans fil 100 (i.e. la puissance maximale utilisable sur chaque antenne 110, 120 pour émettre un signal de communication) est supérieure ou égale à 20 mW.

Plus particulièrement, et tel qu'illustré par la figure 1, les antennes 110, 120 sont intégrées à la structure du dispositif 100, par exemple au niveau de sa périphérie. En outre, les antennes 110, 120 sont configurées pour rayonner spatialement suivant des zones distinctes du dispositif 100 (i.e. les première et deuxième antennes 110, 120 sont non colocalisées). Ainsi, la première antenne 110 (respectivement la deuxième antenne 120) est configurée pour rayonner vers le haut (respectivement le bas) du dispositif de communication sans fil 100. Il est à noter que cette différence dans l'orientation spatiale des première et deuxième antennes 110, 120 implique, dans le mode de réalisation considéré ici, que la première antenne 110 (respectivement la deuxième antenne 120) rayonne prioritairement au niveau de la tête de l'utilisateur (respectivement au niveau du tronc de l'utilisateur).

Il convient toutefois de noter que ces dispositions ne sont pas limitatives de l'invention. En particulier, aucune limitation n'est attachée à la nature du dispositif 100 dès lors que ce dernier est en mesure de réaliser des communications sans fil. Par exemple, en alternative à un smartphone, il peut s'agir d'une tablette numérique, d'un ordinateur portable, d'un assistant personnel, d'une montre connectée, d'une liseuse électronique, etc.

De la même manière, aucune limitation n'est attachée à la puissance maximale d'émission du dispositif de communication sans fil 100. On note cependant que la puissance maximale d'émission peut admettre une borne supérieure du fait de l'existence d'une norme de communication imposée localement par une réglementation, cette borne supérieure dépendant de la bande fréquentielle utilisée pour communiquer. Ces aspects étant bien connus de l'homme du métier, ils ne sont pas détaillés plus avant ici.

Le nombre d'antennes ne constitue pas plus une limitation de l'invention dès lors qu'une pluralité sont aptes à rayonner suivantes des zones distinctes. En d'autres termes, rien n'exclut d'envisager plusieurs antennes aptes à rayonner au niveau de zones identiques (ou sensiblement identiques) du dispositif de communication sans fil 100, dès lors que, parmi toutes les antennes équipant ledit dispositif 100, au moins deux de ces antennes sont aptes à rayonner suivantes des zones distinctes. En effet, et comme cela est décrit en détail ultérieurement, lesdites au moins deux antennes aptes à rayonner suivantes des zones distinctes sont destinées à être utilisées de manière spécifique pour limiter le débit d'absorption spécifique généré lors de l'émission d'un signal de communication.

Par ailleurs, dans le présent mode de réalisation, le dispositif 100, et donc notamment les première et deuxième antennes 110, 120, sont configurés pour émettre et recevoir des signaux de communication correspondant à des signaux de téléphonie mobile 4G. Il convient toutefois de préciser que l'invention reste applicable à d'autres types de signaux de communication, comme par exemple des signaux de téléphonie mobile autres que 4G (par exemple 2G, 3G, 5G, mais également 6G quand elle sera disponible), des signaux Wi-Fi, des signaux WiMax, des signaux Bluetooth, etc. D'une manière générale, aucune limitation n'est attachée aux signaux de communication pouvant être considérés dans le cadre de la présente invention dès lors qu'il s'agit de signaux radioélectriques.

Outre lesdites première et deuxième antennes 110, 120, le dispositif de communication sans fil 100 est configuré de manière matérielle et logicielle pour émettre et recevoir lesdits signaux de communication. A cet effet, et de manière conventionnelle, le dispositif 100 comporte au moins une chaîne d'émission et au moins une chaîne de réception (non représentées sur les figures). Chaque chaîne d'émission comporte par exemple un convertisseur numérique-analogique, un modulateur ainsi qu'un amplificateur de puissance. Chaque chaîne de réception, quant à elle, comporte par exemple un amplificateur faible bruit, un démodulateur ainsi qu'un convertisseur analogique-numérique.

Le dispositif 100 comporte également une unité électronique de traitement de signal (non représentée sur les figures), couramment dénommée unité «DSP » (acronyme de l'expression anglosaxonne « Digital Signal processor »), et configurée pour générer des signaux en bande de base destinés à être acheminés vers les antennes 110, 120 via ladite au moins une chaîne d'émission ainsi qu'à traiter des signaux reçus par les antennes 110, 120 et acheminés à ladite unité DSP via ladite au moins une chaîne de réception.

Le dispositif de communication sans fil 100 comporte également des moyens de commutation 130 aptes à connecter sélectivement la première antenne 110 ou bien la deuxième antenne 120 à une chaîne d'émission/réception afin de permettre l'émission/la réception d'un signal de communication. De tels moyens de commutation 130 sont de conception connue en soi. A titre d'exemple nullement limitatif, il peut s'agir d'un duplexeur ou bien d'un commutateur de sélection.

D'une manière générale, l'homme du métier connait l'architecture conventionnelle d'un dispositif de communication sans fil apte à l'émission/réception de signaux radioélectriques, si bien que ces aspects ne sont pas davantage détaillés ici.

Le dispositif de communication sans fil 100 comporte en outre un dispositif de contrôle 140 mettant en oeuvre des traitements visant à contrôler le fonctionnement du dispositif 100 de sorte à limiter le DAS moyenné en temps généré par chacune desdites antennes 110, 120, en mettant en oeuvre un procédé de contrôle du fonctionnement dudit dispositif 100.

La figure 2 représente schématiquement un exemple d'architecture matérielle du dispositif de contrôle 140 intégré au dispositif de communication sans fil 100 de la figure 1.

Tel qu'illustré par la figure 2, le dispositif de contrôle 140 dispose de l'architecture matérielle d'un ordinateur. Ainsi, le dispositif de contrôle 140 comporte, notamment, un processeur 141, une mémoire vive 142, une mémoire morte 143 et une mémoire non volatile 144. Il dispose en outre de moyens de communication 145.

La mémoire morte 143 du dispositif de contrôle 140 constitue un support d'enregistrement conforme à l'invention, lisible par le processeur 141 et sur lequel est enregistré un programme d'ordinateur PROG conforme à l'invention, comportant des instructions pour l'exécution d'étapes du procédé de contrôle. Le programme PROG définit des modules fonctionnels du dispositif de contrôle 140, qui s'appuient ou commandent les éléments matériels 141 à 145 du dispositif de contrôle 140 cités précédemment. Ces modules fonctionnels sont illustrés sur la figure 1 à titre nullement limitatif, et sont décrits plus en détails ci-après en référence à différents modes de mise en oeuvre.

Les moyens de communication 145 permettent notamment au dispositif 141 de transmettre des signaux de commande aux moyens de commutation 130 afin de sélectionner la première antenne 110 ou bien la deuxième antenne 120 (i.e. afin de connecter sélectivement la première antenne 110 ou bien la deuxième antenne 120 à une chaîne d'émission/réception afin de permettre l'émission/la réception d'un signal de communication). A cet effet, les moyens de communication 145 peuvent par exemple comporter un bus de données informatiques apte à la transmission desdites signaux de commande. Alternativement, lesdits signaux de commande peuvent être transmis via une interface de communication, filaire ou non filaire, apte à mettre en oeuvre tout protocole adapté connu de l'homme du métier. Par ailleurs, les moyens de communication 145 intègrent également les première et deuxième antennes 110, 120.

Il est à noter que dans le mode de réalisation décrit ici en référence aux figures 1 et 2, il est considéré que le dispositif de contrôle 140 est un élément externe au processeur général (non représenté sur les figures) du dispositif de communication sans fil 100 (un tel processeur général est encore appelé « chipset » ou bien « SoC » (abréviation de « System on Chip ») dans la littérature anglosaxonne). Bien entendu, de telles dispositions ne sont pas limitatives de l'invention, et rien n'exclut d'envisager d'autres modes de réalisation dans lesquels le dispositif de contrôle 140 est intégré audit processeur général.

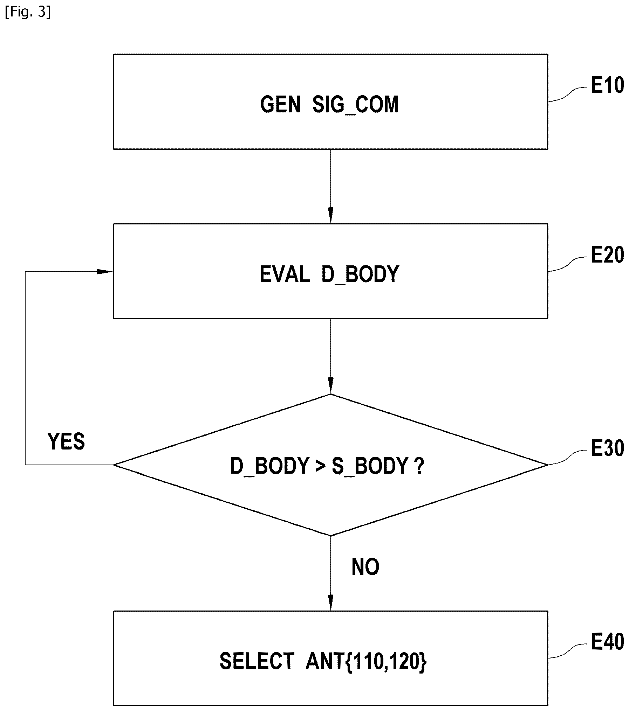

La figure 3 représente, sous forme d'ordinogramme, un mode particulier de mise en oeuvre d'un procédé de communication, dit « procédé général », mis en oeuvre par le dispositif de communication sans fil 100. Ledit procédé général englobe le procédé de contrôle selon l'invention mis en oeuvre par le dispositif de contrôle 140 de la figure 2.

Comme mentionné ci-avant, le DAS considéré dans le cadre de la présente invention est un DAS moyenné en temps, encore dit « DAS moyen ». La moyenne en temps du DAS s'effectue sur une période de temps donnée T_DAS. Qui plus est, et de manière conventionnelle, ledit DAS moyen s'évalue en considérant une distance donnée, dite « distance de contrôle » D_DAS, entre le dispositif de communication 100 et le corps humain (i.e. le corps de l'utilisateur dudit dispositif 100).

Aussi, pour la description de ce mode de mise en oeuvre du procédé de communication, et donc a fortiori du procédé de contrôle, on considère de manière nullement limitative une émission d'un signal de communication 4G dans un contexte spécifique de contrainte réglementaire, par exemple une contrainte réglementaire dérivée d'une législation nationale. Cette contrainte réglementaire impose aux deux antennes 110, 120 des limites d'exposition en termes de DAS moyen. Plus particulièrement, ces limites d'exposition s'expriment ici de la manière suivante :
- la période de temps T_DAS considérée pour le DAS moyen est égale à six minutes,
- le seuil maximal S_DAS (i.e. le seuil à ne pas dépasser) en termes de DAS moyen est égal à 2 W/kg pour 10g de matière humaine,
- la distance de contrôle D_DAS est nulle. Il est à noter que le fait d'avoir une distance de contrôle D_DAS nulle revient à considérer une réglementation la plus stricte possible en termes de distance, ainsi comparable à ce qui est pratiquée par exemple en Europe désormais pour ce qui concerne la tête et le tronc.

Il importe toutefois de noter que les valeurs des paramètres pris en compte pour définir les limites d'exposition ne constituent qu'une variante d'implémentation de l'invention, et rien n'exclut d'envisager d'autres valeurs, que ce soit en termes de période de temps et/ou de seuil maximal et/ou de distance de contrôle. En particulier, on comprend que ce ou ces valeurs peuvent provenir d'une norme de communication imposée de manière réglementaire dans une zone géographique données (exemple : aux Etats-Unis, la période de temps considérée est égale à 1 minute et 30 secondes). Selon un autre exemple, la distance de contrôle peut présenter une valeur entre 0 et 5 mm.

Qui plus est, les paramètres qui sont pris en compte dans ce mode de mise en oeuvre sont applicables à toutes les antennes du dispositif de communication sans fil 100, donc en particulier aux première et deuxième antennes 110, 120, afin de définir des limites d'exposition communes à toutes lesdites antennes. Toutefois, là encore, de telles dispositions ne sont pas limitatives de l'invention, et rien n'exclut d'envisager différentes valeurs de période de temps et/ou de seuil maximal et/ou de distance de contrôle de sorte à définir des limitations d'exposition propres à chaque antenne (exemple : on peut fixer un seuil de 2 W/kg pour la ou les antennes rayonnant en direction du tronc et de la tête, et un autre seuil de 4 W/kg pour la ou les antennes rayonnant en direction des membres).

Enfin, on considère en outre que lorsque débute le procédé de communication, les moyens de commutation 130 sont initialement configurés pour connecter la deuxième antenne 120 à une chaîne d'émission du dispositif de communication sans fil 100.

Tel qu'illustré par la figure 3, le procédé de communication comporte tout d'abord une étape E10 de génération d'un signal de communication SIG_COM. Ladite étape E10 est mise en oeuvre par le dispositif de communication sans fil 100, plus particulièrement par l'unité DSP décrite ci-avant.

Cette génération du signal de communication SIG_COM fait par exemple suite à la composition d'un numéro de téléphone par l'utilisateur du dispositif 100, afin d'entrer en communication avec l'utilisateur d'un autre smartphone auquel est attribué ledit numéro de téléphone.

Dans la mesure où les moyens de commutation 130 connectent la deuxième antenne 120 à une chaîne d'émission lorsque le signal SIG_COM est généré, c'est cette deuxième antenne 120 qui est destinée à être utilisée en premier pour réaliser l'émission dudit signal SIG_COM.

Dans le mode de mise en oeuvre décrit ici en référence à la figure 3, le procédé de communication comporte également une étape E20 d'évaluation d'une distance D_BODY entre le dispositif de communication sans fil 100 et le corps de l'utilisateur dudit dispositif 100. Ladite étape E20 est mise en oeuvre par un module MOD_EVAL équipant le dispositif de contrôle 140, et fait partie du procédé de contrôle.

On comprend en effet que lorsque l'utilisateur du dispositif 100 compose le numéro à appeler, le dispositif 100 est éloigné du corps dudit utilisateur. Une fois le numéro composé, l'utilisateur porte le dispositif 100 au niveau de son oreille ou une autre partie du corps, de sorte que la distance D_BODY diminue jusqu'à devenir nulle.

Aussi, pendant l'exécution de l'étape E30, le procédé de communication comporte également une étape E30 de comparaison de la distance D_BODY avec un seuil donné S_BODY. Ladite étape E30 est mise en oeuvre par un module MOD_COMP équipant le dispositif de contrôle 140, et fait partie du procédé de contrôle.

Aucune limitation n'est attachée à la valeur dudit seuil S_BODY, qui peut par exemple être de l'ordre de la dizaine de centimètres ou du centimètre (e.g. 20 cm, 10 cm, 5 cm), ou bien encore de l'ordre de la dizaine de millimètres ou du millimètre (e.g. 20 mm, 10 mm, 5 mm).

Tel qu'illustré par la figure 3, lesdites étapes E20 et E30 sont itérées tant la distance D_BODY reste supérieure au seuil S_BODY. Aussi, et comme mentionné ci-avant, l'utilisateur porte le dispositif 100 à son oreille, de sorte que la distance D_BODY devient nulle à partir d'un moment, et donc inférieure (ou égale) au seuil S_BODY, ce qui déclenche l'exécution d'une étape E40 de sélection alternative des première et deuxième antennes 110, 120 pour émettre le signal de communication SIG_COM. Ladite étape E40 est mise en oeuvre par un module de sélection MOD_SELECT équipant le dispositif de contrôle 140, et fait partie du procédé de contrôle.

La sélection alternative des antennes 110, 120 pour l'émission du signal SIG_COM (i.e. leur connexion respective à une chaine d'émission grâce aux moyens de commutation 130) est effectuée de sorte que le DAS moyen généré par chaque antenne 110, 120 sur la période de temps T_DAS ainsi qu'en considérant la distance de contrôle D_DAS est inférieur au seuil S_DAS.

Comme mentionné ci-avant, la sélection des antennes 110, 120 conformément à l'étape E40 comporte l'envoi de signaux de commande appropriés aux moyens de commutation 130, de sorte à connecter de manière sélective lesdites antennes 110, 120 à une chaîne d'émission.

Dans le présent mode de mise en oeuvre, la puissance d'émission utilisée par une antenne 110, 120 sélectionnée (i.e. une antenne 110, 120 connectée à une chaîne d'émission grâce aux moyens de commutation 130) est la puissance maximale d'émission du dispositif de communication sans fil 100.

Le fait de considérer une puissance maximale d'émission par chaque antenne sélectionnée ne constitue cependant qu'une variante d'implémentation de l'invention. Rien n'exclut en effet de considérer d'autres variantes dans lesquelles la puissance d'émission d'une ou plusieurs antennes peut être modulée au cours des différentes sélections de ladite ou desdites antennes, dès lors que le DAS moyen reste inférieur au seuil S_DAS pour ladite ou lesdites antennes.

Par ailleurs, dans le présent mode de réalisation, la sélection alternative des antennes 110, 120 est effectuée selon une périodicité fixe.

Aucune limitation n'est attachée à la valeur de cette périodicité fixe dès lors que le DAS moyen reste inférieur au seuil S_DAS pour ladite ou lesdites antennes.

Alternativement, rien n'exclut d'envisager que la sélection alternative des antennes 110, 120 soit mise en oeuvre selon une périodicité dynamique (i.e. variable dans le temps) dès lors que le DAS moyen reste inférieur au seuil S_DAS pour ladite ou lesdites antennes. Par exemple, la sélection alternative peut être mise en oeuvre selon une périodicité dynamique en fonction de blocs d'informations à transmettre, par exemple en fonction d'éléments de signaux radioélectriques à transmettre encore couramment appelé « bursts », étant entendu que la commutation des antennes est préférentiellement réalisée entre deux bursts afin de limiter la perte d'information à transmettre.

Il est à noter que les périodes (ou les instants) de sélection des antennes, ainsi que les puissances utilisées par chaque antenne peuvent notamment être prédéterminées suite à des campagnes de tests en laboratoire. Ces périodes (ou instants) et puissances sont ensuite enregistrées dans une mémoire du dispositif de contrôle 140 (e.g. la mémoire non volatile 144) pour être utilisées lors de la mise en oeuvre du procédé de contrôle.

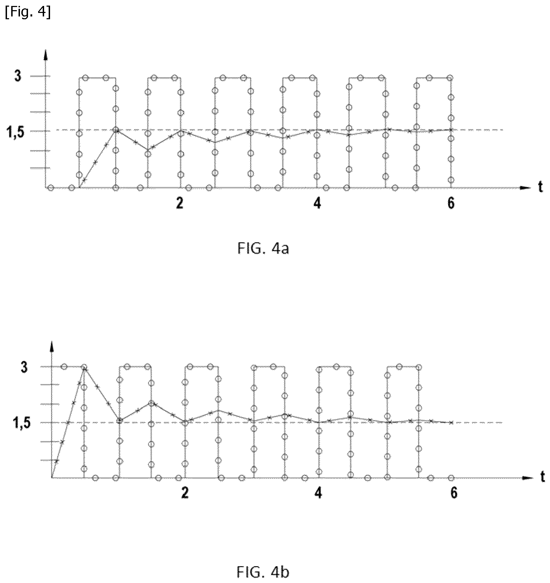

La figure 4 illustre un exemple spécifique d'application du procédé de communication de la figure 3.

Plus particulièrement, la figure 4 comporte deux sous-figures 4a, 4b. La sous-figure 4a est un graphique représentant l'évolution temporelle (temps t en abscisses) du DAS moyen (ligne continue munie de croix) ainsi que du DAS instantané (ligne continue munie de cercles) pour la première antenne 110.

La sous-figure 4b, quant à elle, est un graphique représentant l'évolution temporelle (temps t en abscisses) du DAS moyen (ligne continue munie de croix) ainsi que du DAS instantané (ligne continue munie de cercles) pour la deuxième antenne 120.

Dans l'exemple de la figure 4, la périodicité de sélection des première et deuxième antennes 110, 120 est fixe et égale à 30 secondes (la deuxième antenne 120 émet pendant les 30 premières secondes, puis la première antenne 110 émet pendant les 30 secondes suivantes, ainsi de suite). En outre, lesdites première et deuxième antennes 110, 120, lorsqu'elles sont sélectionnées, utilisent la puissance maximale d'émission du dispositif de communication sans fil 100 pour émettre le signal SIG_COM.

Comme cela peut être constaté sur chacune des sous-figures 4a, 4b, le DAS moyen généré par chacune des antennes 110, 120 est inférieur à S_DAS (= 2 W/kg) au bout de la période T_DAS (= 6 minutes). En d'autres termes, la sélection alternative des première et deuxième antennes 110, 120 permet avantageusement de respecter les limites d'exposition tout en exploitant la puissance maximale du dispositif de communication sans fil 100, ce qui permet d'assurer un excellent débit de liaison montant, et donc une excellente qualité de service.

Il est à noter que le procédé de communication, et donc a fortiori le procédé de contrôle, ont été décrits en considérant que le dispositif de communication sans fil 100 est équipé de deux antennes 110, 120. Toutefois, et comme déjà mentionné ci-avant, ce nombre d'antennes n'est pas limitatif de l'invention, et rien n'exclut d'envisager plus de deux antennes, et donc une sélection alternative (étape E40) entre plus de deux antennes, dès lors que le DAS moyen généré par une antenne reste inférieur au seuil S_DAS. Dans ce cas, la sélection alternative s'effectue préférentiellement de manière séquentielle entre les différentes antennes.

Le procédé de contrôle a en outre été décrit jusqu'à présent en considérant la mise en oeuvre des étapes E20 et E30 pour évaluer la distance D_BODY et la comparer au seuil S_BODY, de sorte à conditionner le déclenchement de l'étape E40 de sélection alternative des antennes 110, 120. Aussi, et d'une part, on comprend que si la distance D_BODY redevient supérieure au seuil S_BODY a un moment donné, cela peut interrompre la sélection alternative des antennes 110, 120. Alternativement, la sélection alternative n'est pas interrompue même si la distance D_BODY redevient supérieure au seuil S_BODY, par exemple pour des raisons de sécurité.

D'autre part, il importe de noter que la mise en oeuvre des étapes E20 et E30 est optionnelle au sens de l'invention. Dit encore autrement, l'invention couvre des modes de mise en oeuvre dans lesquels la sélection alternative des antennes est effectuée indépendamment de la valeur de la distance D_BODY.

Rien n'exclut non plus d'envisager des modes de mise en oeuvre dans lesquels le déclenchement de la sélection alternative des antennes est conditionné différemment. Par exemple, le procédé de contrôle peut comporter une étape d'évaluation de la puissance d'émission utilisée par une antenne en cours d'utilisation pour émettre le signal de communication (e.g. la deuxième antenne 120 dans l'exemple de la figure 3, étant donné qu'il s'agit de l'antenne connectée à une chaîne d'émission avant la mise en oeuvre du procédé de contrôle). Dès lors, l'exécution de l'étape de sélection est consécutive au fait que ladite puissance d'émission évaluée est supérieure à un seuil donné.

En outre, bien que l'évaluation de la distance D_BODY et celle de la puissance d'émission utilisée par une antenne en cours d'utilisation aient été décrites ci-avant comme deux alternatives de mise en oeuvre, rien d'exclut d'envisager encore d'autres modes dans lesquels ces deux aspects sont combinées. A titre d'exemple nullement limitatif, la sélection alternative des antennes peut être déclenchée si non seulement D_BODY est inférieure au seuil S_BODY, mais également si la puissance d'émission en cours d'utilisation dépasse un seuil donné.

Enfin, l'invention a été décrite jusqu'à présent en considérant que la sélection alternative des antennes comporte notamment la génération de commandes par le dispositif de contrôle 140 et la transmission de ces commandes au moyens de commutation 130. Toutefois, la sélection peut aussi consister en une identification d'une antenne dans une liste d'antennes, et la transmission de cette information d'identification à des moyens distincts du dispositif de contrôle 140 et aptes à générer (sur la base de ladite information d'identification) une commande appropriée destinée aux moyens de commutation 130.

## Revendications

1. Procédé de contrôle du fonctionnement d'un dispositif de communication sans fil (100) comportant une pluralité d'antennes (110, 120) configurées pour rayonner spatialement suivant des zones distinctes, ledit procédé comportant une étape de sélection alternative (E40) desdites antennes pour émettre un signal de communication, ladite sélection étant effectuée de sorte que le débit d'absorption spécifique moyen généré par chaque antenne sur une période de temps donnée ainsi qu'en considérant une distance donnée, dite « distance de contrôle », entre le dispositif de communication et le corps humain est inférieur à un seuil déterminé.

2. Procédé selon la revendication 1, dans lequel le nombre d'antennes est strictement supérieur à deux.

3. Procédé selon l'une quelconque des revendications 1 à 2, dans lequel la puissance d'émission utilisée par une antenne sélectionnée est la puissance maximale d'émission du dispositif de communication sans fil.

4. Procédé selon l'une quelconque des revendications 1 à 3, ledit procédé comportant une étape d'évaluation (E20) d'une distance entre le dispositif de communication et le corps humain, l'exécution de l'étape de sélection étant consécutive au fait que ladite distance évaluée est inférieure à un seuil donné.

5. Procédé selon l'une quelconque des revendications 1 à 4, ledit procédé comportant une étape d'évaluation de la puissance d'émission utilisée par une antenne en cours d'utilisation pour émettre ledit signal de communication, l'exécution de l'étape de sélection (E40) étant consécutive au fait que ladite puissance d'émission évaluée est supérieure à un seuil donné.

6. Procédé selon la revendication 5, dans lequel l'étape d'évaluation de la puissance d'émission comporte un ensemble d'évaluations de la puissance d'émission en considérant respectivement un ensemble de valeurs de distance de contrôle, ladite puissance d'émission évaluée correspondant à la puissance d'émission maximale obtenue à partir dudit ensemble d'évaluations de la puissance d'émission.

7. Procédé selon l'une quelconque des revendications 1 à 6, dans lequel la sélection alternative des antennes est effectuée selon une périodicité fixe ou dynamique.

8. Procédé selon l'une quelconque des revendications 1 à 7, dans lequel ladite distance de contrôle est nulle.

9. Procédé selon l'une quelconque des revendications 1 à 8, dans lequel ladite période de temps est égale à six minutes.

10. Procédé selon l'une quelconque des revendications 1 à 9, dans lequel le seuil dudit débit d'absorption spécifique moyen est égal à 2 W/kg.

11. Procédé selon l'une quelconque des revendications 1 à 10, dans lequel la puissance maximale d'émission du dispositif de communication est supérieure ou égale à 20 mW.

12. Programme d'ordinateur comportant des instructions pour la mise en oeuvre d'un procédé de contrôle selon l'une quelconque des revendications 1 à 11 lorsque ledit programme est exécuté par un ordinateur.

13. Support d'enregistrement lisible par un ordinateur sur lequel est enregistré un programme d'ordinateur selon la revendication 12.

14. Dispositif de contrôle (140) comportant des moyens configurés pour mettre en oeuvre un procédé de contrôle selon l'une quelconque des revendications 1 à 11.

15. Dispositif de communication sans fil (100) comportant une pluralité d'antennes configurées pour rayonner spatialement suivant des zones distinctes ainsi qu'un dispositif de contrôle selon la revendication 14.
